# EUROPÄISCHE PATENTSCHRIFT

(11) **EP 3 902 388 B1**
(45) Veröffentlichungstag und Bekanntmachung des Hinweises auf die Patenterteilung: **13.11.2024**
(21) Anmeldenummer: 19832662.1
(22) Anmeldetag: 19.12.2019
(51) Int. Cl.: A01G 3/06, A01G 3/08, A01G 20/47, A01D 34/90, A47L 9/00, A47L 9/12, G10K 11/162

(54) **ARBEITSGERÄT**
WORK TOOL
OUTIL DE TRAVAIL

(30) Priorität: 27.12.2018 DE 102018251706
(43) Veröffentlichungstag der Anmeldung: 03.11.2021
(73) Patentinhaber: Robert Bosch GmbH, 70442 Stuttgart (DE)
(72) Erfinder: COUSSINS, Adrian, Suffolk IP14 1TT (GB)
(86) Internationale Anmeldenummer: PCT/EP2019/086303
(87) Internationale Veröffentlichungsnummer: WO 2020/136077

(56) Entgegenhaltungen:
- WO-A1-2017/124430
- DE-A1- 102011 007 204
- US-A- 5 269 665
- US-A1- 2012 141 255

## Beschreibung

Die vorliegende Erfindung betrifft ein als Gartengerät ausgebildetes Arbeitsgerät mit einem in einem Gehäuse angeordneten elektrischen Motor.

### Stand der Technik

Motorbetriebene Arbeitsgeräte wie beispielsweise Heckenscheren, Kettensägen, Rasenmäher, Laubsauger bzw. Laubbläser, oder Staubsauger, als kabellos oder kabelgebunden betriebene Arbeitsgeräte, haben sich als effiziente Geräte für den Haus- und Gartenbereich und dergleichen erwiesen. Diese Geräte haben jedoch alle den Nachteil, dass sie bauartbedingt oftmals nicht zu unterschätzende Schallemission während des Betriebs verursachen, welche sowohl den Betreiber selber als auch die Umgebung stören. Aus diesem Grund wurden vielerorts bereits einschränkende Bestimmungen, wie zum Beispiel Grenzwerte für den maximal zulässigen Geräuschpegel erlassen, welche den Gebrauch dieser motorbetriebenen Arbeitsgeräte einschränken.

Die genannten Schallemissionen entstehen beispielsweise durch rotierende Komponenten des Motors oder durch die Luftströmung des Kühlkreislaufes. Teilweise ist es möglich, derartige Geräusche gegebenenfalls durch eine entsprechende Auslegung des Motors zu reduzieren. Es kann beispielsweise versucht werden, bestimmte Resonanzfrequenzen des Gehäuses oder anderer Bauteile nicht durch den Motor anzuregen.

Insbesondere die für Gartengeräte verwendeten Motoren müssen eine ausreichende Leistung haben, um bei relativ geringem Bauraum die gestellten Anforderungen zu erfüllen. Dabei sollten sie aber auch aus den genannten Gründen hinsichtlich der störenden Schallemissionen nicht zu laut sein. Beide Anforderungen können jedoch oftmals durch die Bauweise des Motors alleine nicht oder nur schwer erfüllt werden.

Aus der US5211144 ist beispielsweise eine tragbare, handgeführte Gebläseeinheit bekannt, die von einem Motor angetrieben wird. Dabei ist vorgesehen, dass sich ein Lufteinlassgeräusch des Motors durch die Verwendung einer speziell entworfenen Lufteinlassbox, die wiederum innerhalb des Motors angeordnet ist, wesentlich verringert. Während des Betriebs des Motors wird die Ansaugluft durch Lufteinlasskanäle in den Ansaugkasten gesaugt und strömt über ein Luftfilterelement, so dass gefilterte Luft in den Vergaser strömt.

Ferner ist zum Entfernen von Staub aus einem Abluftstrom eines Arbeitsgerätes, wie z. B. eines Staubsaugers, bekannt, Motoren mit einem Luftfilter zu versehen. Dabei wird angesaugte Luft nach dem Passieren der Schmutzaufnahme und der Staub- und/oder Geruchsfilter im Allgemeinen über einen Ausblaskanal zumeist einer Mehrzahl benachbart zueinander angeordneter Gehäuseschlitze zugeführt. Beim Austreten der Abluft aus den Gehäuseschlitzen können beträchtliche Strömungsgeschwindigkeiten erreicht werden, welche wiederum hohe Geräuschpegel verursachen können.

Zur Linderung dieses Problems offenbart beispielsweise die DE102011007204A1 ein Verfahren, welches das Ausblasen eines Abluftstroms durch einen zusätzlichen schallabsorbierenden und luftdurchlässigen Schaumstoff beschreibt, um den Geräuschpegel in Haus und Garten auch bei hoher Leistung und bei hohen Frequenzen möglichst gering zu halten. Dabei werden zur Geräuschdämmung oftmals innenliegende Schäume und Dämmmatten eingesetzt, so dass die ausströmende Abluft vornehmlich über die Stärke bzw. Dicke der Schäume bzw. Dämmmatten beruhigt wird. Dabei erweist sich jedoch unter anderem der nicht unbeträchtliche Raumbedarf, um die voluminösen Schallabsorber innerhalb des Arbeitsgerätes unterzubringen, als nachteilig.

Ferner sei auf die Druckschriften US 2012/141255 A1, WO 2017/124430 A1 und US 5 269 665 A verwiesen.

### Offenbarung der Erfindung

Es ist Aufgabe der Erfindung die oben genannten Nachteile zu verbessern und ein Arbeitsgerät bereitzustellen, das im Vergleich zu den Arbeitsgeräten des Standes der Technik ein verbessertes Konzept zur Geräuschreduzierung und Luftfilterung offenbart und das dabei möglichst einfach aufgebaut, kostengünstig und flexibel ist.

Diese Aufgabe wird durch ein Arbeitsgerät gemäß Anspruch 1 gelöst. Vorteilhafte Ausgestaltungen, Varianten und Weiterbildungen der Erfindung sind den Unteransprüchen zu entnehmen.

Ein erfindungsgemäßes Arbeitsgerät weist die Merkmale des Anspruchs 1 auf. Der wesentliche Vorteil der Erfindung liegt darin, dass man mittels eines in den Filter integrierten Absorptionselementes ein für die Luftzirkulation im Gehäuse des Arbeitsgerätes strömungsoptimiertes Absorptionselement bereitstellt, welches eine Luftfiltration und eine größere, an das Arbeitsgerät angepasste optimierte Schallabsorption aufweist, ohne einen erhöhten Materialaufwand und einer damit einhergehenden größeren Gewichtsbelastung für das Arbeitsgerätes. Dadurch wird gegenüber dem Stand der Technik ein Arbeitsgerät bereitgestellt, das einen geringeren Geräuschpegel und eine verbesserte Luftfiltration aufweist.

Vorteilhafterweise weist das Absorptionselement eine Struktur auf, die zur Dämpfung von Luftschall und/oder Körperschall geeignet ist. In einer bevorzugten Ausführungsform ist das Absorptionselement derart innerhalb des Gehäuses angeordnet, dass das Absorptionselement den wenigstens einen Lufteinlass und/oder Luftauslass abdeckt.

Zudem kann der Lufteinlass und/oder Luftauslass eine Labyrinthstruktur aufweisen, insbesondere eine Labyrinthstruktur welche eine direkte Sichtverbindung durch den Lufteinlass und/oder Luftauslass verhindert, wobei diese zusätzlich den Austritt von Luftschall vermindert.

Besonders Vorteilhaft ist das Absorptionselement entlang eines Zuluftpfades der Kühlungsluft hinter dem wenigstens einen Lufteinlass angeordnet. Alternativ oder zusätzlich kann das Absorptionselement entlang eines Abluftpfades der Abluft vor dem wenigstens einen Luftauslass angeordnet sein. Auf diese Weise kann gewährleistet werden, dass sowohl der Geräuschpegel der durch in das Gehäuse einströmende bzw. ausströmende Luft entsteht als auch der Geräuschpegel der durch rotierende bzw. sich bewegende Teile des Motors produziert wird, absorbiert werden kann.

Es hat sich als vorteilhaft herausgestellt, wenn eine Dichte des Absorptionselements derart gewählt ist, dass er dominante Schwingungsanteile des Gehäuses und/oder des Arbeitsgerätes dämpft.

Vorteilhafterweise weist das Arbeitsgerät ferner ein Absorptionselement an oder in zumindest einer weiteren Stelle des Gehäuses auf. Dabei ist es besonders Vorteilhaft, wenn das Gehäuse mit dem Absorptionselement weitestgehend ausgekleidet ist.

In einer bevorzugten Ausführungsform ist das Absorptionselement durch ein geeignetes Formgebungsverfahren derart hergestellt, dass das Absorptionselement integraler Bestandteil des Gehäuses ist. So kann beispielsweise durch Verwendung einer Presspassung eine einfache und preisgünstige Befestigung des Absorptionselementes am Gehäuse erzielt werden. Auf diese Weise kann ein in seinen Dimensionen relativ großes Absorptionselement bereits beim Herstellungsverfahren in das Gehäuse eingebracht werden, so dass ein daraus resultierender Vorteil einer Kosten- und Gewichtsreduktion des Arbeitsgerätes ermöglicht werden kann.

Dabei ist es von Vorteil, wenn das Absorptionselement derart in dem Gehäuse angeordnet ist, dass es von einem Benutzer des Arbeitsgerätes gewechselt und/oder nachgerüstet werden kann.

In einer weiteren vorteilhaften Ausgestaltung ist das Absorptionselement derart innerhalb des Gehäuses am Motor und/oder an einer Gehäusewand des Gehäuses angeordnet, dass das Absorptionselement Körperschall und/oder Luftschall des Motors dämpft.

Vorteilhafterweise besteht das Absorptionselement zumindest teilweise aus einem offenzelligen Schaumstoff, insbesondere aus einem Polyurethanschaum oder einem Melaminschaum. Ein offenzelliger Schaumstoff weist eine hohe Elastizität auf, so dass dieser im Vergleich zu anderen Absorptionsmaterialien gleichzeitig eine Gewichtseinsparung erzielt werden kann.

In einer vorteilhaften Ausgestaltung besteht das Absorptionselement zumindest teilweise aus einer mikroperforierten Platte, Folie oder Membran oder einem Plattenabsorber. Dabei sind vor allem die vergleichsweise niedrigen Kosten und der geringere Platzbedarf von Vorteil.

Grundsätzlich können somit als Absorptionselement bzw. als schallabsorbierende Materialien poröse, offenzellige Materialen, wie beispielsweise künstliche Mineralfasern, Schäume, Vliese sowie aus Wolle oder wolleartigen Stoffe verwendet werden. Alternativ können Granulate bzw. haufwerksporige Stoffe in gebundener Form oder als lose Schüttungen, z.B. auf mineralischer, metallischer Basis oder aus Kunststoffen verwendet werden. All diese Materialien verfügen in homogener, einschichtiger Ausführung über eine weitgehende ähnliche Schall absorbierende Wirkung, wenn sie z.B. einen geeigneten Strömungswiderstand aufweisen. Hierbei erweist es sich als vorteilhaft, dass in unterschiedlichen Bereichen im Gehäuse verschiedene Absorptionselemente mit unterschiedlichen Dicken und Größen verwendet werden können, wodurch das Einbringen eines Absorptionselementes in das Gehäuse des Arbeitsgerätes flexibel und an das jeweilige Arbeitsgerät angepasst erfolgen kann. Auf diese Weise kann ein an das jeweilige Arbeitsgerät optimierter Luftaustausch ermöglicht und eine ideale Kühlung des Motors gewährleistet werden.

Vorzugsweise weist das Absorptionselement bei einer Frequenz zwischen 0 und 6400 Hz einen Schallabsorptionsgrad von >50 %, vorzugsweise von > 70%, insbesondere von >90% auf.

Bevorzugterweise weist das Absorptionselement eine Rohdichte zwischen 5 und 15 Kg/m³, vorzugsweise zwischen 7 und 13 Kg/m ³, insbesondere zwischen 8 und 11 Kg/m ³ auf. Dabei kann es grundsätzlich von Vorteil sein, wenn die oben genannte Rohdichte abhängig von der frequenzabhängig gewünschten Schallabsorption gewählt wird.

In einer besonders vorteilhaften Ausgestaltung weist das Absorptionselement einen an das jeweilige Arbeitsgerät angepassten Abscheidegrad auf. Auf diese Weise kann bei verschiedenen Arbeitsgeräten ein individuelles Absorptionselement verwendet werden, wobei auch das Absorptionselement selber in Durchströmungsrichtung eine Filtration mit einem zunehmend höheren Abscheidegrad aufweisen kann. Das kann beispielsweise dadurch erreicht werden, dass das Absorptionselement über den Querschnitt unterschiedliche Rohdichten, von einer weniger dichten zu einer dichteren Seite; unterschiedliche Porenstrukturen, von einer grobporigen zu einer feinporigen Seite; und/oder unterschiedliche Faserstrukturen, von einer grobfaserige zu einer feinfaserigen Seite; aufweist. Dabei kann es grundsätzlich von Vorteil sein, wenn der oben genannte Abscheidegrad abhängig vom jeweils gewünschten Schallabsorptionsgrad des Arbeitsgerätes gewählt wird.

Bevorzugterweise handelt es sich bei dem Arbeitsgerät um ein Gartengerät, insbesondere eine Heckenschere, ein Gartenbläser, eine Kettensäge oder ein Rasenmäher.

Erfindungsgemäß ist das Arbeitsgerät ein kabelgebundenes, mit einem elektrischen Motor ausgestattetes, oder ein kabelloses, mit einem akkubetriebenen elektrischen Motor ausgestattetes Arbeitsgerät.

Weitere Merkmale, Anwendungsmöglichkeiten und Vorteile der Erfindung ergeben sich aus der nachfolgenden Beschreibung der Ausführungsbeispiele der Erfindung, welche in der Zeichnung dargestellt sind. Dabei ist zu beachten, dass die in den Figuren beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung nur einen beschreibenden Charakter haben und nicht dazu gedacht sind, die Erfindung in irgendeiner Form einzuschränken.

### Zeichnungen

Nachfolgend wird die Erfindung anhand von in den Zeichnungen dargestellten Ausführungsbeispielen näher erläutert. Es zeigen:
- Fig. 1: eine schematische Schnittansicht eines Gehäuses eines Arbeitsgerätes von der Seite zur Veranschaulichung einer Anordnung eines Absorptionselementes:
- Fig. 2: eine schematische Teilschnittansicht entlang der Linie A-A des Gehäuses des Arbeitsgerätes aus Figur 1;
- Fig. 3: eine schematische Schnittansicht eines Gehäuses eines Arbeitsgerätes von der Seite zur Veranschaulichung einer Anordnung eines erfindungsgemäßen Absorptionselementes; und
- Fig. 4: einen schematischen Teilschnittansicht entlang der Linie B-B des Gehäuses des Arbeitsgerätes aus Figur 3.

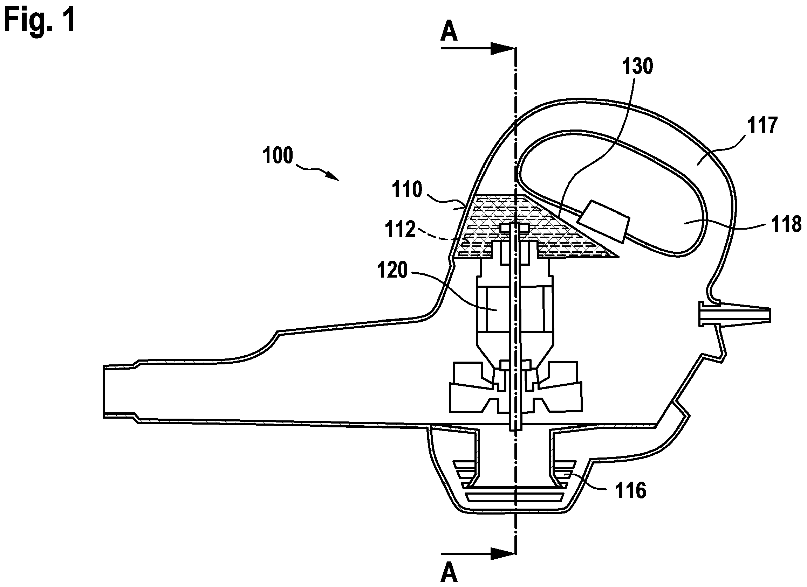

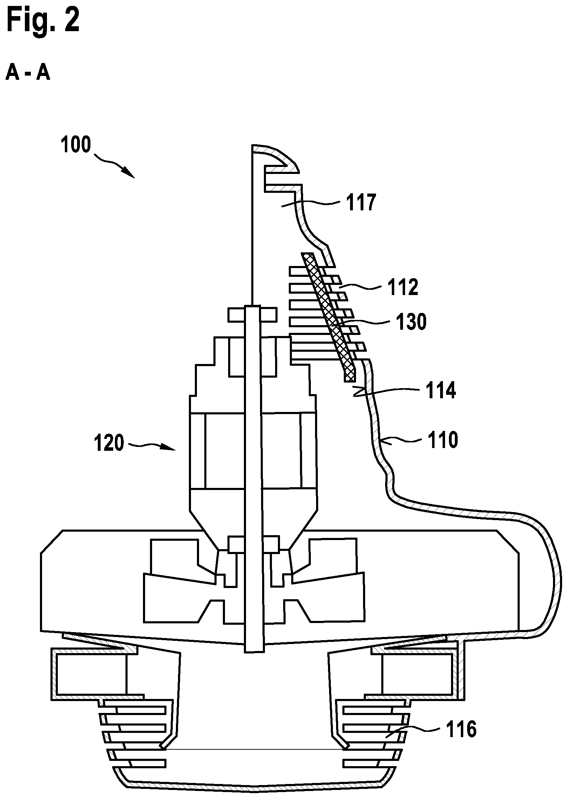

Die Figuren 1 und 2 zeigen jeweils in einer schematischen Schnittansicht ein erfindungsgemäßes Arbeitsgerät 100, das beispielhaft als Laubbläser ausgebildet ist. Dieser weist ein Gehäuse 110 auf, in dem ein mit Strom versorgter, elektrischer Antriebsmotor 120 angeordnet ist. Das Gehäuse 110 weist einen ersten Handgriff 117 auf, der die Form eines geschlossenen Bügels offenbart und eine Öffnung 118 ausbildet, so dass ein Benutzer den Handgriff 117 besser mit Fingern umschließen kann. Ferner weist das Gehäuse 110 im oberen Bereich in der Nähe des Handgriffs 117 und der Öffnung 118 mehrere schlitzförmige Lufteinlässe 112, durch die Kühlluft zum Motor 120 zugeführt werden kann und im unteren Bereich mehrere Luftauslässe 116, durch die Abluft aus dem Gehäuse 110 heraus abgeführt werden kann, auf.

Wie in den Figuren 1 und 2 dargestellt, ist innerhalb des Gehäuses 110 entlang eines Zuluftpfades der Kühlluft hinter den Lufteinlässen 112 ein erfindungsgemäßes schallabsorbierendes Absorptionselement 130 angeordnet, welches zusätzlich als Filter für die zuführende Kühlluft wirkt. Dabei ist es von Vorteil, wenn das Absorptionselement 130 derart in dem Gehäuse 110 angeordnet ist, dass es von einem Benutzer des Arbeitsgeräts 100 jederzeit gewechselt oder bei Bedarf nachgerüstet werden kann.

Um die genannte Luftfilterung und schallabsorbierende Wirkung des Absorptionselements 130 zu gewährleisten, besteht das Absorptionselement 130 zumindest teilweise aus einem offenzelligen Schaumstoff, insbesondere aus einem Polyurethanschaum oder einem Melaminschaum und/oder zumindest teilweise aus einer mikroperforierten Platte, Folie oder Membran oder einem Plattenabsorber.

Ferner ist es möglich, dass Absorptionselement 130 unterschiedliche Abscheidegrade mit einer Rohdichte zwischen 5 und 15 Kg/m³, vorzugsweise zwischen 7 und 13 Kg/m ³, insbesondere zwischen 8 und 11 Kg/m ³ aufweist.

Bei einer Frequenz zwischen 0 und 6400 Hz liegt dem Absorptionselement 130 ferner ein Schallabsorptionsgrad von >50 %, vorzugsweise von > 70%, insbesondere von >90% vor, so dass gewährleistet ist, dass insbesondere bei einem Arbeitsgerät 100 mit einem hohen Frequenzbereich, wie es beispielsweise bei einem Laubbläser oder einer Heckenschere der Fall ist, eine hohe Schallabsorption ermöglicht werden kann.

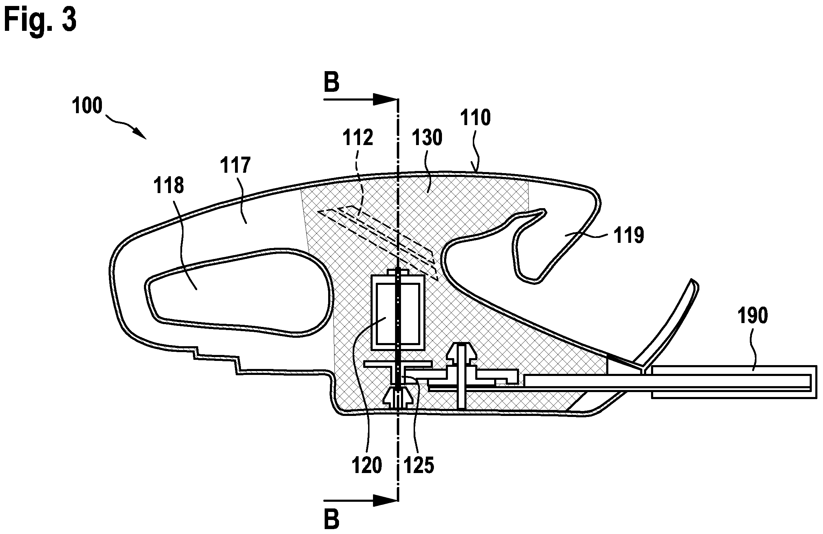

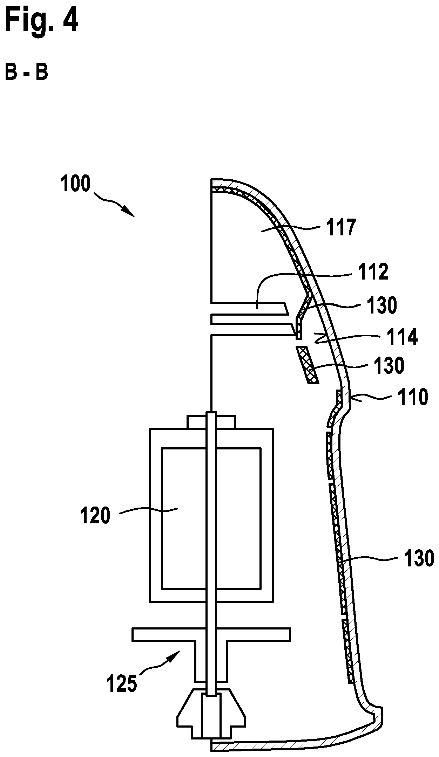

In den Figuren 3 und 4 ist jeweils in einer schematischen Schnittansicht beispielhaft eine Heckenschere als Arbeitsgerät 100 dargestellt. Diese weist ebenfalls ein Gehäuse 110 auf, in dem ein Motor 120 und ein Getriebe 125 angeordnet ist. Eine Messerschiene 190, die zwei nur schematisch dargestellte übliche gegeneinander verschiebbare Messer aufweist, wird durch das im Gehäuse 110 angeordnetes Getriebe 125 in hin- und hergehende Bewegung versetzt. Das Gehäuse 110 weist ferner in einem oberen Bereich einen ersten Handgriff 117 auf, der die Form eines geschlossenen Bügels offenbart und eine Öffnung 118 ausbildet, so dass ein Benutzer den Handgriff 117 besser mit Fingern umschließen kann. Zusätzlich weist das Gehäuse 110 einen zweiten Handgriff 119 auf.

Wie bereits aus den Figuren 1 und 2 bekannt, weist auch das Gehäuse 110 der Heckenschere 100 im oberen Bereich in der Nähe des Handgriffs 117 und der Öffnung 118 mehrere schlitzförmige Lufteinlässe 112 auf. Wie ferner aus den Figuren 3 und 4 ersichtlich, kann das Absorptionselement 130 das Gehäuse 110 weitestgehend auskleiden. Auf diese Weise deckt das Absorptionselement 130 nicht nur die schlitzförmigen Lufteinlässe 112 ab, sondern kleidet auch den Motor 120 und das Getriebe 125 weitestgehend vollständig aus. Alternativ, aber nicht im Detail dargestellt, kann das Absorptionselement 130 an beliebig vielen weiteren Stellen innerhalb des Gehäuses 110 angeordnet sein. Das Absorptionselement 130 ist unmittelbar benachbart zur Gehäusewand 114 angeordnet. Es bildet eine Struktur aus, die sowohl zur Dämpfung von Luftschall als auch zur Dämpfung von Körperschall geeignet ist. Dabei ist es von Vorteil, wenn das Absorptionselement 130 ein integraler Bestandteil des Gehäuses 110 ist und bereits durch ein geeignetes Formgebungsverfahren derart hergestellt werden kann, dass beispielsweise durch Verwendung einer Presspassung eine einfache und preisgünstige Befestigung des Absorptionselementes 130 am Gehäuse 110 erzielt werden kann.

Grundsätzlich wird darauf hingewiesen, dass die vorliegende Erfindung nicht auf einen Laubbläser oder eine Heckenschere beschränkt ist, sondern vielmehr bei unterschiedlichen Arbeitsgeräten, insbesondere bei Gartengeräten Anwendung finden kann. Dabei kann ein kabelgebundener Motor 120 oder ein kabelloser, akkubetriebener elektrischer Motor 120 in dem Gehäuse 110 angeordnet sein.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Arbeitsgerät (100), wobei das Arbeitsgerät (100) ein kabelgebundenes Gartengerät (100) mit einem elektrischen Motor (120) oder ein kabelloses Gartengerät mit einem akkubetriebenen elektrischen Motor (120) ist, insbesondere eine Heckenschere, ein Gartenbläser, eine Kettensäge oder ein Rasenmäher, umfassend einen in einem Gehäuse (110) angeordneten Motor (120) zum Antrieb des Arbeitsgerätes (100), wobei das Gehäuse (110) wenigstens einen Lufteinlass (112) zur Zuführung von Kühlluft zum Motor (120) und zumindest einen Luftauslass (116) zur Abführung von Abluft aus dem Gehäuse (110) heraus aufweist, und wobei in dem Gehäuse (110) ein schallabsorbierendes Absorptionselement (130) derart angeordnet ist, dass das Absorptionselement (130) desweiteren als Filter für die Kühlluft und die Abluft wirkt.

2. Arbeitsgerät (100) nach Anspruch 1, **dadurch gekennzeichnet, dass** das Absorptionselement (130) eine Struktur aufweist, die zur Dämpfung von Luftschall und/oder Körperschall geeignet ist.

3. Arbeitsgerät (100) nach Anspruch 1 oder 2, **dadurch gekennzeichnet, dass** eine Dichte des Absorptionselements (130) derart gewählt ist, dass es dominante Schwingungsanteile des Gehäuses (110) und/oder des Arbeitsgerätes (100) dämpft.

4. Arbeitsgerät (100) nach einem der Ansprüche 1 bis 3, **dadurch gekennzeichnet, dass** das Absorptionselement (130) derart innerhalb des Gehäuses (110) angeordnet ist, dass das Absorptionselement (130) den wenigstens einen Lufteinlass (112) und/oder Luftauslass (116) abdeckt.

5. Arbeitsgerät (100) nach einem der Ansprüche 1 bis 4, **dadurch gekennzeichnet, dass** das Absorptionselement (130) entlang eines Zuluftpfades der Kühlluft hinter dem wenigstens einen Lufteinlass (112) und/oder entlang eines Abluftpfades der Abluft vor dem wenigstens einen Luftauslass (116) angeordnet ist.

6. Arbeitsgerät (100) nach einem der Ansprüche 1 bis 5, **dadurch gekennzeichnet, dass** das Arbeitsgerät (100) ferner ein Absorptionselement (130) an oder in zumindest einer weiteren Stelle des Gehäuses (110) aufweist.

7. Arbeitsgerät (100) nach einem der Ansprüche 1 bis 6, **dadurch gekennzeichnet, dass** das Gehäuse (110) mit dem Absorptionselement (130) ausgekleidet ist.

8. Arbeitsgerät (100) nach einem der Ansprüche 1 bis 7, **dadurch gekennzeichnet, dass** das Absorptionselement (130) durch ein geeignetes Formgebungsverfahren derart hergestellt ist, dass das das Absorptionselement (130) integraler Bestandteil des Gehäuses (110) ist.

9. Arbeitsgerät (100) nach einem der Ansprüche 1 bis 8, **dadurch gekennzeichnet, dass** das Absorptionselement (130) wechselbar und/oder nachgerüstbar in dem Gehäuse (110) angeordnet ist, so dass es von einem Benutzer des Arbeitsgeräts gewechselt und/oder nachgerüstet werden kann.

10. Arbeitsgerät (100) nach einem der Ansprüche 1 bis 9, **dadurch gekennzeichnet, dass** das Absorptionselement (130) derart innerhalb des Gehäuses (110) am Motor (120) und/oder an einer Gehäusewand (114) des Gehäuses (110) angeordnet ist, dass das Absorptionselement (130) Körperschall und/oder Luftschall des Motors (120) dämpft.

11. Arbeitsgerät (100) nach einem der Ansprüche 1 bis 10, **dadurch gekennzeichnet, dass** das Absorptionselement (130) zumindest teilweise aus einem offenzelligen Schaumstoff, insbesondere aus einem Polyurethanschaum oder einem Melaminschaum, besteht.

12. Arbeitsgerät (100) nach einem der Ansprüche 1 bis 11, **dadurch gekennzeichnet, dass** das Absorptionselement (130) zumindest teilweise aus einer mikroperforierten Platte, Folie oder Membran oder einem Plattenabsorber besteht.

13. Arbeitsgerät (100) nach einem der Ansprüche 1 bis 12, **dadurch gekennzeichnet, dass** das Absorptionselement (130) bei einer Frequenz zwischen 0 und 6400 Hz einen Schallabsorptionsgrad von >50 %, vorzugsweise von > 70%, insbesondere von >90% aufweist.

14. Arbeitsgerät (100) nach einem der Ansprüche 1 bis 13, **dadurch gekennzeichnet, dass** das Absorptionselement (130) eine Rohdichte zwischen 5 und 15 Kg/m³, vorzugsweise zwischen 7 und 13 Kg/m ³, insbesondere zwischen 8 und 11 Kg/m ³ aufweist.

15. Arbeitsgerät (100) nach einem der Ansprüche 1 bis 14, **dadurch gekennzeichnet, dass** das Absorptionselement (130) über den Querschnitt unterschiedliche Rohdichten, von einer weniger dichten zu einer dichteren Seite; unterschiedliche Porenstrukturen, von einer grobporigen zu einer feinporigen Seite; und/oder unterschiedliche Faserstrukturen, von einer grobfaserigen zu einer feinfaserigen Seite; aufweist.

## Claims

1. Work tool (100), wherein the work tool (100) is a corded garden tool (100) with an electric motor (120) or a cordless garden tool with a battery-operated electric motor (120), in particular a hedge trimmer, a garden blower, a chain-saw or a lawnmower, comprising a motor (120), which is arranged in a housing (110) and is intended for driving the work tool (100), wherein the housing (110) has at least one air inlet (112) for supplying cooling air to the motor (120) and at least one air outlet (116) for discharging waste air from the housing (110), and wherein a sound-absorbing absorption element (130) is arranged in the housing (110) in such a way that the absorption element (130) also acts as a filter for the cooling air and the waste air.

2. Work tool (100) according to Claim 1, **characterized in that** the absorption element (130) has a structure which is suitable for damping airborne sound and/or structure-borne sound.

3. Work tool (100) according to Claim 1 or 2, **characterized in that** a density of the absorption element (130) is chosen such that it damps dominant vibration components of the housing (110) and/or of the work tool (100).

4. Work tool (100) according to one of Claims 1 to 3, **characterized in that** the absorption element (130) is arranged within the housing (110) in such a way that the absorption element (130) covers the at least one air inlet (112) and/or air outlet (116).

5. Work tool (100) according to one of Claims 1 to 4, **characterized in that** the absorption element (130) is arranged downstream of the at least one air inlet (112) along a supply-air path of the cooling air and/or upstream of the at least one air outlet (116) along a waste-air path of the waste air.

6. Work tool (100) according to one of Claims 1 to 5, **characterized in that** the work tool (100) also has an absorption element (130) at or in at least one further location of the housing (110).

7. Work tool (100) according to one of Claims 1 to 6, **characterized in that** the housing (110) is lined with the absorption element (130).

8. Work tool (100) according to one of Claims 1 to 7, **characterized in that** the absorption element (130) is produced by a suitable shaping process in such a way that the absorption element (130) is an integral part of the housing (110).

9. Work tool (100) according to one of Claims 1 to 8, **characterized in that** the absorption element (130) is interchangeable and/or retrofittable in the housing (110), so that it can be changed and/or retrofitted by a user of the work tool.

10. Work tool (100) according to one of Claims 1 to 9, **characterized in that** the absorption element (130) is arranged within the housing (110) on the motor (120) and/or on a housing wall (114) of the housing (110) in such a way that the absorption element (130) damps structure-borne sound and/or airborne sound of the motor (120).

11. Work tool (100) according to one of Claims 1 to 10, **characterized in that** the absorption element (130) consists at least partially of an open-cell foam, in particular of a polyurethane foam or a melamine foam.

12. Work tool (100) according to one of Claims 1 to 11, **characterized in that** the absorption element (130) consists at least partially of a microperforated panel, film or membrane or panel absorber.

13. Work tool (100) according to one of Claims 1 to 12, **characterized in that** the absorption element (130) has at a frequency between 0 and 6400 Hz a sound absorptivity of >50%, preferably of >70%, in particular of >90%.

14. Work tool (100) according to one of Claims 1 to 13, **characterized in that** the absorption element (130) has an apparent density of between 5 and 15 kg/m³, preferably between 7 and 13 kg/m ³, in particular between 8 and 11 kgfm ³.

15. Work tool (100) according to one of Claims 1 to 14, **characterized in that** the absorption element (130) has different apparent densities over the cross section, from a less dense side to a more dense side; different pore structures, from a coarse-pored side to a fine-pored side; and/or different fibre structures, from a coarse-fibred side to a fine-fibred side.

## Revendications

1. Outil de travail (100), l'outil de travail (100) étant un outil de jardinage (100) filaire avec un moteur électrique (120) ou un outil de jardinage sans fil avec un moteur électrique (120) alimenté par batterie, notamment un taille-haie, un souffleur de jardin, une scie à chaîne ou une tondeuse à gazon, comprenant un moteur (120) agencé dans un boîtier (110) pour entraîner l'outil de travail (100), le boîtier (110) présentant au moins une entrée d'air (112) pour l'amenée d'air de refroidissement au moteur (120) et au moins une sortie d'air (116) pour l'évacuation d'air d'échappement hors du boîtier (110), et un élément d'absorption (130) absorbant le bruit étant agencé dans le boîtier (110) de telle sorte que l'élément d'absorption (130) agit en outre en tant que filtre pour l'air de refroidissement et l'air d'échappement.

2. Outil de travail (100) selon la revendication 1, **caractérisé en ce que** l'élément d'absorption (130) présente une structure adaptée à l'amortissement du bruit aérien et/ou du bruit de structure.

3. Outil de travail (100) selon la revendication 1 ou 2, **caractérisé en ce qu'**une densité de l'élément d'absorption (130) est choisie de telle sorte qu'il amortit des parties de vibration dominantes du boîtier (110) et/ou de l'outil de travail (100).

4. Outil de travail (100) selon l'une quelconque des revendications 1 à 3, **caractérisé en ce que** l'élément d'absorption (130) est agencé à l'intérieur du boîtier (110) de telle sorte que l'élément d'absorption (130) recouvre l'au moins une entrée d'air (112) et/ou sortie d'air (116).

5. Outil de travail (100) selon l'une quelconque des revendications 1 à 4, **caractérisé en ce que** l'élément d'absorption (130) est agencé le long d'un trajet d'air d'alimentation de l'air de refroidissement après l'au moins une entrée d'air (112) et/ou le long d'un trajet d'air d'évacuation de l'air d'évacuation avant l'au moins une sortie d'air (116).

6. Outil de travail (100) selon l'une quelconque des revendications 1 à 5, **caractérisé en ce que** l'outil de travail (100) présente en outre un élément d'absorption (130) sur ou dans au moins un autre emplacement du boîtier (110).

7. Outil de travail (100) selon l'une quelconque des revendications 1 à 6, **caractérisé en ce que** le boîtier (110) est revêtu de l'élément d'absorption (130).

8. Outil de travail (100) selon l'une quelconque des revendications 1 à 7, **caractérisé en ce que** l'élément d'absorption (130) est fabriqué par un procédé de moulage approprié de telle sorte que l'élément d'absorption (130) fait partie intégrante du boîtier (110).

9. Outil de travail (100) selon l'une quelconque des revendications 1 à 8, **caractérisé en ce que** l'élément d'absorption (130) est agencé de manière interchangeable et/ou rééquipable dans le boîtier (110), de telle sorte qu'il peut être changé et/ou rééquipé par un utilisateur de l'outil de travail.

10. Outil de travail (100) selon l'une quelconque des revendications 1 à 9, **caractérisé en ce que** l'élément d'absorption (130) est agencé à l'intérieur du boîtier (110) sur le moteur (120) et/ou sur une paroi de boîtier (114) du boîtier (110) de telle sorte que l'élément d'absorption (130) amortit le bruit de structure et/ou le bruit aérien du moteur (120).

11. Outil de travail (100) selon l'une quelconque des revendications 1 à 10, **caractérisé en ce que** l'élément d'absorption (130) est constitué au moins en partie d'une mousse à cellules ouvertes, notamment d'une mousse de polyuréthane ou d'une mousse de mélamine.

12. Outil de travail (100) selon l'une quelconque des revendications 1 à 11, **caractérisé en ce que** l'élément d'absorption (130) est constitué au moins en partie d'une plaque, d'une feuille ou d'une membrane microperforée ou d'un absorbeur à plaque.

13. Outil de travail (100) selon l'une quelconque des revendications 1 à 12, **caractérisé en ce que** l'élément d'absorption (130) présente, à une fréquence comprise entre 0 et 6 400 Hz, un taux d'absorption acoustique > 50 %, de préférence > 70 %, notamment > 90 %.

14. Outil de travail (100) selon l'une quelconque des revendications 1 à 13, **caractérisé en ce que** l'élément d'absorption (130) présente une densité apparente comprise entre 5 et 15 kg/m³, de préférence entre 7 et 13 kg/m³, notamment entre 8 et 11 kg/m³.

15. Outil de travail (100) selon l'une quelconque des revendications 1 à 14, **caractérisé en ce que** l'élément d'absorption (130) présente, sur la section transversale, différentes densités apparentes, d'un côté moins dense à un côté plus dense ; différentes structures de pores, d'un côté à pores grossiers à un côté à pores fins ; et/ou différentes structures de fibres, d'un côté à fibres grossières à un côté à fibres fines.
